# EUROPÄISCHE PATENTSCHRIFT

(11) **EP 2 712 879 B1**
(45) Veröffentlichungstag und Bekanntmachung des Hinweises auf die Patenterteilung: **14.02.2018**
(21) Anmeldenummer: 12186693.3
(22) Anmeldetag: 28.09.2012
(51) Int. Cl.: C08G 18/50, C08G 18/79, C08G 18/08, C08G 18/10, C08G 18/42, C09J 175/06

(54) **Latent reaktive Schmelzklebstoffzusammensetzung**
Latent reactive melt adhesive compound
Composition de colle à fondre à réaction latente

(43) Veröffentlichungstag der Anmeldung: 02.04.2014
(73) Patentinhaber: Collano Adhesives AG, 6203 Sempach-Station (CH)
(72) Erfinder: Schulthess, Adrian, 1734 Tentlingen (CH); Mathes, Hendrik, 6203 Sempach-Station (CH); Grimminger, Benjamin, 3013 Bern (CH); Meincke, Olaf, 3014 Bern (CH); Harling, Steffen, 8404 Winterthur (CH); Meola, Giuseppe, 8408 Winterthur (CH); Schaible, Stefan, 8280 Kreuzlingen (CH)
(74) Vertreter: Hepp Wenger Ryffel AG

(56) Entgegenhaltungen:
- EP-A1- 1 386 936
- EP-B1- 0 598 873
- EP-B1- 1 231 232
- US-A- 5 710 215

## Beschreibung

Die vorliegende Erfindung betrifft eine latent reaktive Schmelzklebstoffzusammensetzung auf Basis isocyanatreaktiver Verbindungen, welche bei Raumtemperatur in fester, aber flexibler Form vorliegt, sich im Temperaturbereich von bis < 100°C thermoplastisch verarbeiten lässt und im Bereich von 100°C bis 160°C aushärtbar ist. Des Weiteren werden die Verwendung der erfindungsgemässen Klebstoffzusammensetzung und ein Verfahren zur Herstellung eines latent reaktiven Schmelzklebstoffgranulats, sowie einer latent reaktiven Schmelzklebstofffolie beschrieben. Die Erfindung umfasst darüber hinaus die ausgehärtete Klebstoffzusammensetzung und mit einer latent reaktiven oder ausgehärteten Klebstoffzusammensetzung beschichtete Substrate bzw. Fügeteile. Die Zusammensetzung zeichnet sich zum einen dadurch aus, dass sie eine ausreichende Festigkeit aufweist, um in fester, aber nicht spröder Form bei Temperaturen unter 40°C vorzuliegen. So ist u.a. die Verarbeitung zu Folien möglich, die erst zu einem späteren Zeitpunkt bei höheren Temperaturen ausgehärtet werden können. Zum anderen besitzt die beschriebene Zusammensetzung besonders vorteilhafte Verarbeitungseigenschaften.

Im Stand der Technik sind latent reaktive Schmelzklebstoffe seit längerem bekannt. Diese zeichnen sich dadurch aus, dass sie bei Raumtemperatur fest und lagerfähig und bei höheren Temperaturen härtbar sind.

EP 0 598 873 B1 beschreibt ein Verfahren zur Herstellung von reaktiven Schmelzmassen. Diese bestehen aus bei Raumtemperatur festem, aber schmelzbarem Polymer mit isocyanatreaktiven Gruppen und einer Vormischung aus einem festen Isocyanat und einem Desaktivierungsmittel. Die Schmelzmasse wird auf Trägermaterialien schichtweise aufgetragen, so dass die desaktivierten Isocyanat- und die Polymerschichten nicht vermischt sind. Oberhalb von 40°C lassen sich diese Schichten verflüssigen und umformen. Zwischen 100 und 120°C härten sie aus.

EP 1 386 936 A1 betrifft ein Verfahren und eine Zusammensetzung zur Herstellung heisshärtender Schmelzmassen umfassend mindestens ein Polymer mit isocyanatreaktiven Gruppen und mindestens ein oberflächendesaktiviertes, festes Isocyanat, welches in das Polymer eindispergiert ist. Das isocyanatreaktive Polymer wird erst beim Vermischen eines niedermolekularen Polyols mit freiem Diisocyanat (im stöchiometrischen Unterschuss) durch Molekulargewichtsaufbau unmittelbar bei der Verarbeitung gebildet.

EP 1 231 232 B1 beschreibt einen bei Raumtemperatur festen, reaktiven Einkomponentenschmelzklebstoff, welcher ein bei Raumtemperatur flüssiges oder festes Isocyanat, ein bei Raumtemperatur festes isocyanatreaktives Polymer und/oder Harz, sowie ein nichtisocyanatreaktives Polymer, Harz oder Wachs umfasst. Dieser Klebstoff liegt bei Raumtemperatur nichtklebend vor und wird erst bei Erwärmung auf Temperaturen zwischen 60°C und 160°C haftend.

US 5 710 215 A offenbart ein Verfahren zur Herstellung reaktiver Schmelzen, welche besonders nützlich als Schmelzkleber sind.

Ein Nachteil der bekannten Zusammensetzungen besteht in ihren wenig vorteilhaften Verarbeitungseigenschaften und in ihrer im nicht ausgehärteten Zustand spröden Konsistenz. Beim Beschichten von Substraten mit diesen Zusammensetzungen kommt es oft noch vor dem Aushärten durch Temperaturerhöhung zu einem grossflächigen Abplatzen der Beschichtung von der Substratoberfläche. Eine Herstellung von Folien auf Basis dieser Zusammensetzungen ist durch ihre Sprödigkeit gar nicht erst möglich.

Die.Aufgabe der vorliegenden Erfindung besteht daher darin, eine neue, latent reaktive Schmelzklebstoffzusammensetzung bereitzustellen, welche die vorteilhaften Eigenschaften bekannter, latent reaktiver Schmelzklebstoffzusammensetzungen besitzt und deren nachteilige Eigenschaften nicht aufweist.

Insbesondere sollte die erfindungsgemässe Klebstoffzusammensetzung verbesserte mechanische Eigenschaften besitzen. So sollte sie unterhalb ihrer Schmelztemperatur zäh, aber dennoch flexibel, nicht spröde, nicht klebrig (blockfrei) und nicht ausblutend sein. Diese Eigenschaften ermöglichen u.a., die Zusammensetzung als Film zu extrudieren bzw. verhindern, dass bei Vorbeschichtungen von Substraten mit der Zusammensetzung diese wieder abplatzt.

Insbesondere ist es eine Aufgabe der Erfindung, einen latent reaktiven Schmelzklebstoff mit verbesserten Verarbeitungseigenschaften der Vormischung bereitzustellen. Im ausgehärteten Zustand soll die Zusammensetzung eine chemische Beständigkeit, geringes Kriechverhalten, Rückstellvermögen und einen verbesserten Wärmestand aufweisen.

Die erfindungsgemässe Aufgabe wird durch das Bereitstellen einer latent reaktiven Schmelzklebstoffzusammensetzung nach Anspruch 1 gelöst.

Diese latent reaktive Schmelzklebstoffzusammensetzung umfasst
a) mindestens ein erstes thermoplastisches Polymer, welches mindestens monofunktionell reaktiv gegenüber NCO-Gruppen ist und eine Zugfestigkeit von σ_{M} ≥ 4 MPa bis 30 MPa gemessen nach EN ISO 527-1:1996, sowie eine Bruchdehnung ε_{B} ≥ 5% bis 1000% gemessen nach EN ISO 527-1:1996 aufweist,
b) mindestens ein zweites NCO-reaktives Polymer und/oder Oligomer, welches mindestens di-, bevorzugt tri- oder multifunktionell reaktiv gegenüber NCO-Gruppen ist und eine Schmelztemperatur Tₘ, die niedriger als die Schmelztemperatur Tₘ von Polymer a) ist, besitzt und insbesondere bei 40°C, bevorzugt bei 30°C, besonders bevorzugt bei 20°C in flüssiger Form vorliegt,
c) mindestens ein festes, oberlächendesaktiviertes Di- oder Polyisocyanat,
d) optional: ein oder mehrere thermoplastische Polymere, welche nicht mit NCO-Gruppen reagieren.

Das erste thermoplastische Polymer gemäss Komponente a) liegt in der erfindungsgemässen latent reaktiven Schmelzklebstoffzusammensetzung zu mindestens 20 Gew%, bevorzugt zu mindestens 50 Gew%, besonders bevorzugt zu mindestens 60 Gew%, vor. Es weist eine Schmelztemperatur Tₘ von < 100°C, bevorzugt < 70°C auf, insbesondere hat es thermoplastische Eigenschaften unterhalb der Reaktionstemperatur von > 70°C bis 160°C, bei der die latent reaktive Zusammensetzung aushärtet.

Komponente a) hat ein mittleres Molekulargewicht M_{W} ≥ 25000 g/mol bis 100 000 g/mol. Die mindestens eine NCO-reaktive Gruppe pro Molekül kann eine Hydroxyl- oder Amingruppe sein und ist vorzugsweise eine Hydroxylgruppe. Die Hydroxylzahl der Komponente a) liegt dabei im Bereich von 1 bis 15 [mg KOH/g], vorzugsweise im Bereich von 1 bis 10 [mg KOH/g]. Das Verfahren zur Bestimmung der Hydroxylzahl wird gemäss DIN 53240 durchgeführt.

Komponente a) weist eine hohe Zugfestigkeit σ_{M} von ≥ 4MPa bis 30 MPa, insbesondere ≥ 10 MPa und eine Bruchdehnung von ε_{B} ≥ 5% bis 1000% auf, wobei beide Eigenschaften nach EN ISO 527-1:1996 mit einem Probekörper 1BA, wie in ISO EN 527-2:1996 definiert, gemessen werden.
Insbesondere ist Komponente a) ein lineares Polycaprolacton und/ oder ein lineares Polycaprolacton Polyurethan Präpolymer.
Das zweite Polymer gemäss Komponente b) ist vorzugsweise ein mit Komponente a) verträgliches, NCO-reaktives Polymer.

In der erfindungsgemässen latent reaktiven Schmelzklebstoffzusammensetzung liegt die Komponente b) zu 5 bis 40 Gew%, bevorzugt im Bereich von 10 Gew% bis 25 Gew%, vor. Die mindestens zwei, bevorzugt drei oder mehr NCO-reaktiven Funktionalitäten pro Molekül der Komponente b) können Hydroxyl- oder Aminogruppen sein. Die Hydroxylzahl der Komponente b) liegt im Bereich zwischen 25 und 2000 [mg KOH/g]. Das Verfahren zur Bestimmung der Hydroxylzahl wird gemäss DIN 53240 durchgeführt.

Polymer oder Oligomer b) besitzt eine Schmelztemperatur Tₘ, die niedriger als die Schmelztemperatur Tₘ von Polymer a) ist. Bei 40°C, bevorzugt bei 30°C und besonders bevorzugt bei 20°C liegt Polymer oder Oligomer b) in flüssiger Form vor. Das mittlere Molekulargewicht M_{W} von Komponente b) ist kleiner oder gleich 4000 g/mol. Insbesondere ist Komponente b) ein Polycaprolacton, beispielsweise Poly- ε-Caprolacton, Polyester, Copolyester, Polyether, Copolyether und/oder ein Polycarbonat.

Komponente c) der erfindungsgemässen latent reaktiven Schmelzklebstoffzusammensetzung ist ein pulverförmiges, oberflächendesaktiviertes, aliphatisches und/oder aromatisches Di- und/oder Polyisocyanat, welches in der Zusammensetzung in einer Menge im Bereich von 5 bis 25 Gew% vorliegt.

Mögliche Di- bzw. Polyisocyanate sind unter anderem dimeres 2,4-Toluoldiisocyanat sowie dessen Derivate, 1,5-Diisocyanatonaphthalin, Diisocyanatotoluolenharnstoffe, 1-Isocyanato-3-isocyanatomethyl-3,5,5-trimethylcyclohexan-Isocyanurat, 3,3'-Dimethylbiphenyl-4,4'-diisocyanat, 3,3'-Diisocyanato-4,4'-dimethyl-N,N-diphenylharnstoff, Diphenylmethan-2,2'-diisocyanat-Dimer, Diphenylmethan-2,4'-diisocyanat-Dimer, Diphenylmethan-4,4'-diisocyanat Dimer sowie Mischungen, Uretdion-Dimere, Harnstoff-Dimere, Trimere und Präpolymere der zuvor genannten Verbindungen.

Das verwendete Isocyanat soll eine Schmelztemperatur von Tₘ > 70°C, bevorzugt von ≥ 100°C, besonders bevorzugt von ≥ 110°C aufweisen.

Die Oberflächendesaktivierungen der NCO-Gruppen der Isocyanate kann durch die Zugabe eines oder mehrerer Desaktivierungsmittel, die mit NCO-Gruppen reagieren, zu dem oder den Di- oder Polyisocyanaten erfolgen. Das Desaktivierungsmittel wird zunächst in der flüssigen Komponente b) gelöst, gefolgt von Isocyanat. Alternativ können auch alle Komponenten gleichzeitig in einen Extruder gegeben und miteinander vermischt werden. Als Desaktivierungsmittel werden bevorzugt Verbindungen mit NCO-reaktiven Gruppen wie Hydroxylgruppen oder Aminogruppen, wie z.B. Amine, Diamine, Polyamine, Alkohole, Diole, Polyole und die entsprechenden Thioverbindungen, die mit freien NCO-Gruppen reagieren und eine Oberflächenhülle auf dem Isocyanat ausbilden, verwendet.

Desaktivierungsmittel sind dem Fachmann aus dem Stand der Technik DE 32 30 757 A1, EP 0 204 970 A2 und EP 0 922 720 A1 bekannt. In der erfindungsgemässen Zusammensetzung wird bevorzugt mit trifunktionellem Polyetheramin desaktiviertes Isocyanat verwendet.

Komponente d), welche optional in der erfindungsgemässen latent reaktiven Schmelzklebstoffzusammensetzung enthalten sein kann, ist/sind ein oder mehrere thermoplastische Polymere, welche nicht mit NCO Gruppen reagieren, und in der Zusammensetzung insbesondere von 0 bis zu 10 Gew% vorliegen. Dabei können Harze wie zum Beispiel Kohlenwasserstoffharze, Wachse, Polyolefine oder Polymere und Copolymere auf Ethyl/Vinylacetatbasis zugesetzt werden.

Die latent reaktive Klebstoffzusammensetzung kann alle Komponenten a) bis d), die jeweils in einer Menge ausgewählt aus den oben genannten Gew% Bereichen vorliegen, umfassen.

Des Weiteren kann die erfindungsgemässe latent reaktive Schmelzklebstoffzusammensetzung auch einen oder mehrere Katalysatoren umfassen, wie zum Beispiel Dibutylzinndilaurat (DBTL), 1,4-Diazobicylco[2.2.2]octan (DABCO) oder Triethylamin. Darüber hinaus können auch andere, dem Fachmann als Katalysatoren für die Polyurethanchemie bekannte Katalysatoren eingesetzt werden. Die eingesetzte Menge bewegt sich dabei vorzugsweise in einem Bereich von 0.05 bis 5 Gew% der Mischung.

Latent reaktiv bezeichnet in diesem Zusammenhang die Tatsache, dass die Schmelzklebstoffzusammensetzung umfassend die Komponenten a) bis d) bei Raumtemperatur, d.h. insbesondere bei Temperaturen zwischen 20°C und 40°C, als feste, vorteilhaft nichtklebende Zusammensetzung vorliegt. Erwärmung der Zusammensetzung auf Temperaturen oberhalb von 40°C und unterhalb von 100°C führt dazu, dass sie thermoplastisch verarbeitbar wird und als Granulat verarbeitet oder als Film extrudiert werden kann. Oberhalb des Schmelzpunkts des oberflächendesaktivierten Isocyanats (abhängig von dem jeweiligen Isocyanat, bspw. oberhalb von 70°C, vorzugsweise oberhalb von 100°C, besonders bevorzugt oberhalb von 110°C) kann die Freisetzung der Isocyanate beginnen, so dass sie dann mit den in der Zusammensetzung vorhandenen NCO-reaktiven Gruppen reagieren und zur Vernetzung der Polymere, d.h. zum dauerhaften, irreversiblen Aushärten der Klebstoffzusammensetzung, führen.

Als besonders vorteilhaft in der Verarbeitung der einzelnen Komponenten miteinander erweist sich die Verwendung der flüssigen Komponente b). Diese ermöglicht die Herstellung einer Vormischung aus dem festen Isocyanat c) und der flüssigen Komponente b), welche ein niedriges Molekulargewicht und damit verbunden eine geringe Viskosität und eine niedrige Schmelztemperatur aufweist. Dadurch wird ein leichtes Einarbeiten des Isocyanats in die Mischung der weiteren Komponenten a) und gegebenenfalls b) und/oder d) unterhalb einer Temperatur von 70°C ermöglicht, ohne dass bereits eine Reaktion der einzelnen Komponenten miteinander, welche zum Aushärten der Reaktionsmischung führen würde, erfolgt.
Überraschend ist zudem, dass die flüssige Komponente b) eingearbeitet werden kann, aber nicht ausblutet und die Formulierung bei Raumtemperatur vorteilhaft nicht klebrig macht.

Des Weiteren wurde überraschenderweise bei der Formulierung der erfindungsgemässen latent reaktiven Schmelzklebstoffzusammensetzung gefunden, dass durch die Kombination der oben beschriebenen Komponente a), d.h. des NCO-reaktiven, eine hohe Festigkeit aufweisenden Polymers, mit einem zweiten, flüssigen NCO-reaktiven Polymer der Komponente b) eine Klebstoffzusammensetzung erhalten wird, die deutlich verbesserte mechanische Eigenschaften aufweist.
Die erhöhte Festigkeit der Komponente a) führt dazu, dass die resultierende Zusammensetzung nicht spröde, reissfest und elastisch ist und zu Filmen verarbeitet werden kann. Diese Filme haben eine Dicke von 10 bis 1000 µm, bevorzugt von 20 bis 500 µm, besonders bevorzugt von 40 bis 200 µm.
Die flüssigen Komponente b) ist verzweigt, kurzkettig und pro Masseinheit höher mit NCO-reaktiven Gruppen funktionalisiert als die Komponente a). Sie bewirkt, dass bei gleichbleibender Isocyanatmenge das weniger funktionalisierte Trägerpolymer a) mit guter Festigkeit verwendet werden kann und führt gleichzeitig zu verbesserten Schmelz- und Fliesseigenschaften. Die Klebstoffmatrix weist im latent reaktiven Zustand, eine Lagerfähigkeit der Zusammensetzung bei 20°C von mehreren Monaten und eine Lagerbeständigkeit bei 60 bis 65°C von 4 bis 12 Stunden ohne chemische Veränderungen auf. Im ausgehärteten Zustand bewirken die Polymere oder Oligomere der Komponente b) eine erhöhte Vernetzungsdichte, sowie einen verbesserten Wärmestand von über 140°C bis zu über 170°C der Zusammensetzung, höhere chemische Beständigkeit, Zähigkeit und verbessertes Kriechverhalten.

Des Weiteren umfasst die Erfindung eine Klebstoffzusammensetzung im ausgehärteten Zustand. Diese ist erhältlich, indem die oben beschriebene latent reaktive Schmelzklebstoffzusammensetzung auf eine Temperatur von > 70°C bis 150°C, vorzugsweise auf 110°C bis 120°C erwärmt wird. Oberhalb der Temperaturen von 70°C, vorzugsweise 100°C, besonders bevorzugt 110°C, werden die erfindungsgemäss verwendeten Isocyanate freigesetzt und Komponenten a) und b) reagieren mit diesen. Die Komponenten der latent reaktiven Zusammensetzung vernetzen.

Auch von der Erfindung umfasst ist ein Verfahren zur Herstellung eines latent reaktiven Schmelzklebstoffgranulats umfassend
i) das Mischen eines oder mehrerer Isocyanate mit einem oder mehreren Desaktivierungsmitteln und gegebenenfalls mit der Komponente b) der oben beschriebenen latent reaktiven Schmelzklebstoffzusammensetzung,
ii) das Mischen der im Verfahrensschritt i) erhaltenen Mischung mit der Komponente a) und gegebenenfalls mit den Komponenten b) und/oder d) der oben beschriebenen latent reaktiven Schmelzklebstoffzusammensetzung in einer Mischvorrichtung bei einer Temperatur im Bereich von ≥ 40°C bis 100°C, vorzugsweise 50°C bis 70°C,
iii) das Extrudieren als Strang der Mischung gemäss Schritt ii) und
iv) das Granulieren des Strangs.

Verfahrensschritt ii) wird durchgeführt, indem eine Mischung der Reaktionsmischung aus Schritt i) und gegebenenfalls aus den Komponenten b) und/oder d) in einen auf ≥ 50°C bis 70°C beheizten Extruder gegeben wird, gefolgt von Komponente a), und durchmischt wird. Die so entstandene latent reaktive Klebstoffzusammensetzung wird im Verfahrensschritt iii) durch eine Düse als Strang extrudiert und anschliessend gekühlt und mit Hilfe eines rotierenden Messers in Abschnitte zerteilt, die das Granulat darstellen.

Dieses Granulat ist bei 20°C über mehrere Monate hinweg lagerstabil und kann anschliessend oder zu einem späteren Zeitpunkt thermoplastisch weiter verarbeitet werden.

Eine zweite Verfahrensvariante betrifft die Herstellung einer latent reaktiven Schmelzklebstofffolie, umfassend die folgenden Verfahrensschritte
(i) das Mischen eines oder mehrerer Isocyanate mit einem oder mehreren Desaktivierungsmitteln und gegebenenfalls mit der Komponente b) der oben beschriebenen latent reaktiven Schmelzklebstoffzusammensetzung,
ii) das Mischen der im Verfahrensschritt i) erhaltenen Mischung mit der Komponente a) und gegebenenfalls mit den Komponenten b) und/oder d) der oben beschriebenen latent reaktiven Schmelzklebstoffzusammensetzung in einer Mischvorrichtung bei einer Temperatur im Bereich von ≥ 40°C bis 100°C, vorzugsweise 50°C bis 70°C,
iii) das Extrudieren oder Auswalzen der Mischung gemäss Schritt ii) oder eines gemäss vorstehend erläutertem Verfahren erhaltenen Granulats als Folie.

Dieses Verfahren zur Herstellung einer Schmelzklebstofffolie umfasst die Verfahrensschritte i) und ii), die den Verfahrensschritten i) und ii) bei der Herstellung eines Schmelzklebstoffgranulats entsprechen. Im Schritt iii) wird anstelle einer Düse zur Strangextrusion eine Flachschlitzdüse oder eine gebogene Düse verwendet, durch die die Mischung extrudiert wird. Eine Weiterverarbeitung nach Extrusion mit Hilfe eines Blasfolienverfahrens ist ebenfalls möglich.

Des Weiteren wird die Verwendung der oben beschriebenen latent reaktiven Schmelzklebstoffzusammensetzung zur Herstellung eines latent reaktiven Schmelzklebstoffgranulats und einer latent reaktiven Schmelzklebstofffolie, beide gemäss der oben beschriebenen Verfahrensvarianten hergestellt, beschrieben.

Ein weiterer Aspekt der Erfindung ist ein beschichtetes Substrat oder Fügeteil, das entweder die oben beschriebene latent reaktive Schmelzklebstoffzusammensetzung oder die ebenfalls vorstehend beschriebene ausgehärtete Klebstoffzusammensetzung umfasst.

Die Erfindung wird nachfolgend anhand von Ausführungs- und Vergleichsbeispielen sowie Figuren erläutert, ohne dass der Gegenstand der Erfindung auf die gezeigten Ausführungsformen zu beschränken wäre. Es zeigen:
- Fig. 1:: Rheologische Kurve zum Aushärten einer erfindungsgemässen Zusammensetzung;
- Fig. 2:: Kurve der rheologischen Wärmestandsuntersuchung einer erfindungsgemässen Zusammensetzung.

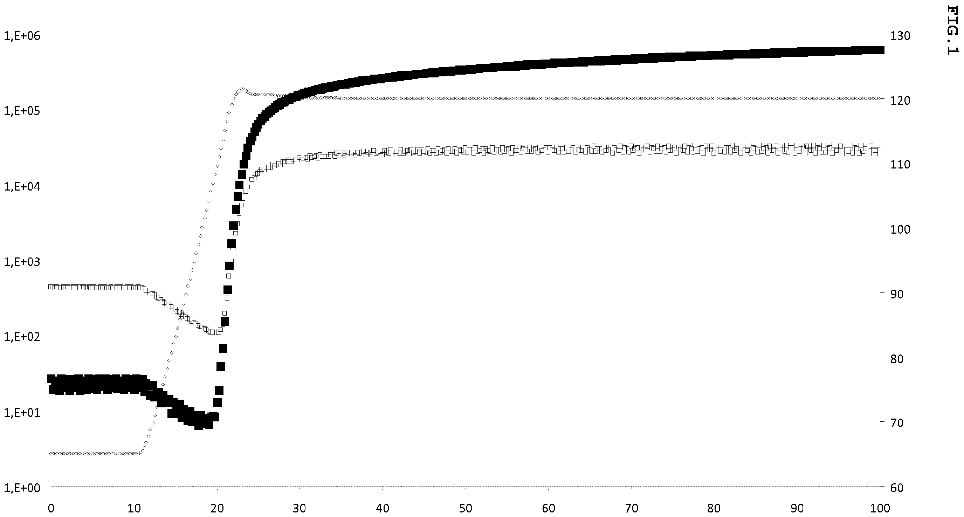

Fig. 1 zeigt einen Graphen der Ergebnisse eines rheologischen Experiments zum Aushärten einer erfindungsgemässen latent reaktiven Schmelzklebstoffzusammensetzung gemäss Ausführungsbeispiel 1.

Die auf der linken Seite eingezeichnete y-Achse des Graphen gibt die Höhe der Temperatur in °C an und bezieht sich auf die Temperaturkurve (dargestellt durch kreisförmige Punkte). Die x-Achse stellt die Zeit in Minuten dar. Auf der rechts eingezeichneten y-Achse sind die gemessenen Module G' und G" in Pa angegeben. Diese werden von den Kurven zur Veränderung des Speichermoduls G' (dunkle, quadratische Punkte)und zur Veränderung des Verlustmoduls G" (helle, quadratische Punkte) dargestellt.

Ist der Verlustmodul G" grösser als der Speichermodul G', fliesst die erfindungsgemässe Schmelzklebstoffzusammensetzung. Dies ist im vorliegenden Experiment bis zu einer Temperatur von inetwa 120°C der Fall. Bei dieser Temperatur steigen beide Kurven nach etwa 30 Minuten steil an, wobei die des Speichermoduls G' diejenige des Verlustmoduls G" kreuzt. Die Schmelzklebstoffzusammensetzung härtet an diesem Punkt aus und wechselt vom flüssigen in den festen Zustand.

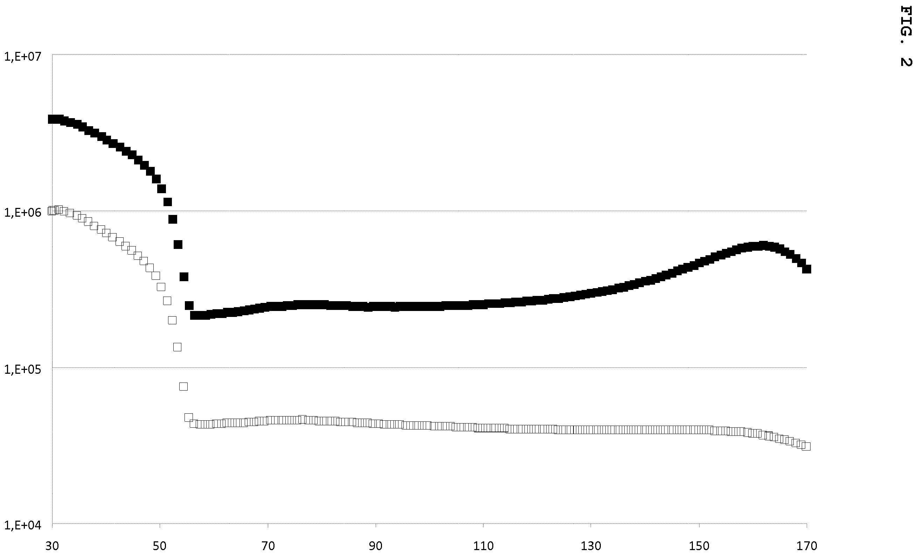

Fig. 2 zeigt den Graph einer rheologischen Wärmestandsuntersuchung einer erfindungsgemässen Schmelzklebstoffzusammensetzung gemäss Ausführungsbeispiel 1 in latent reaktivem und ausgehärteten Zustand über einen Temperaturbereich von 30°C bis 170°C. Der Graph zeigt eine Verlustmodulkurve G" (weisse Quadrate) und eine Speichermodulkurve G' (schwarze Quadrate) und zeigt auf seiner x-Achse die Temperatur in °C und auf der y-Achse den Modul in Pa an.

### Vergleichsbeispiel

Beispiel 1 aus der Patentschrift EP 1 231 232 B1 zur Herstellung einer latent reaktiven Schmelzklebstoffzusammensetzung wurde unter Verwendung des Kohlenwasserstoff-Harzes Novares® TM90 anstelle des in Beispiel 1 angegebenen TM80 (nicht mehr kommerziell verfügbar), welches einen 10°C höheren Erweichungspunkt aufweist, nachgearbeitet und in einem Speedmixer gemischt.
Angaben zur Zugfestigkeit und Bruchdehnung dieser Zusammensetzung sind in Tabelle 3 enthalten.

### BEISPIEL 1

Ein trifunktionelles Polyetheramin (Jeffamine T403 von Huntsman, 0,14g) wurde mit einem trifunktionellen, flüssigen Polycaprolacton (Capa 3091 von Perstorp, 2g) und einem thermoplastischen Polyol (Capa 6250 von Perstorp, 8g) und Dibutylzinndilaurat (Sigma-Aldrich, 0.012g) 30 Minuten bei 80°C in einem Wärmeschrank aufgeschmolzen. Die resultierende Masse wurde anschliessend 30 Sekunden lang in einem Speedmixer bei maximaler Umdrehungszahl gemischt. Nach Zugabe eines dimeren 2,4-Toluoldiisocyanats (Addolink TT von Rheinchemie, 1,405g) wurde die Mischung weitere 90 Sekunden lang gemischt.

Die so erhaltene Mischung kann ausgestrichen und nach dem Erkalten, auch ohne Trägerfolie, problemlos aufgerollt werden. Die Mischung kann bei 120°C ausgehärtet werden.

### BEISPIEL 2

### 2.1 Herstellung der Reaktionsmischung 1:

Zu einem flüssigen Polyol (Capa 3091 von Perstorp, 1035g) in einem 5L Metalleimer wurde ein trifunktionelles Polyetheramin (Jeffamine T403 von Huntsman, 76g) gegeben. Nach kurzem Durchmischen mit einem Glasstab wurde ein dimeres 2,4-Toluoldiisocyanat (Addolink TT von Rheinchemie, 748g) zugegeben. Die Mischung wurde in einem Dissolver eine Minute lang suspendiert. Anschliessend wurde ein Katalysator (Dibutylzinndilaurat von Sigma-Aldrich, 6g) zugegeben und die Mischung drei Minuten lang suspendiert.

Die so erhaltene Reaktionsmischung 1 ist mehrere Wochen lang bei Raumtemperatur lagerfähig.

### 2.2 Herstellung von latent reaktivem Granulat (LRG) aus Reaktionsmischung 1:

Zur Herstellung des LRGs wurde ein Zweiwellenkneter verwendet. Reaktionsmischung 1 (32 Gew%) wurde durch einen auf 50°C geheizten Beschickungstrichter in den Zweiwellenkneter gefördert, der auf eine Temperatur von 60°C geheizt worden war. Ein thermoplastisches Polyol (Capa 6250 von Perstop, 68 Gew%) wurde zugegeben und mit Reaktionsmischung 1 verknetet. Der resultierende Strang der Mischung wurde in einem Wasser-Eis-Bad gekühlt und anschliessend granuliert.

Das so erhaltene LRG ist bei Raumtemperatur mehrere Monate lagerstabil und kann thermoplastisch weiterverarbeitet werden.

### 2.3 Herstellung einer latent reaktiven Folie (LRF) aus Reaktionsmischung 1:

Reaktionsmischung 1 wurde wie oben beschrieben hergestellt. Sie wurde zu 32 Gew% in den Zweiwellenkneter zur Herstellung von LGR mit einem thermoplastischen Polyol (68 Gew%; Capa 6250 von Perstop) gegeben. Die Apparatur wurde mit einer Flachschlitzdüse ausgestattet, durch die die fertige Mischung geführt und auf einer Trägerfolie abgelegt wurde.

### 2.4 Herstellung einer latent reaktiven Folie (LRF) aus latent reaktivem Granulat (LRG):

Latent reaktives Granulat (LRG) wurde in einen Einschneckenextruder gegeben und bei 60°C durch eine Flachschlitzdüse geführt und auf einer Trägerfolie abgelegt.

Die so erhaltene latent reaktive Folie (LRF) ist flexibel und kann über mehrere Monate hinweg gelagert werden. Bei Bedarf kann sie durch einen Temperaturimpuls von mindestens 120°C zum Verkleben gebracht werden.

Alternativ kann LRG auch in einem Ofen aufgeschmolzen und mittels eines Walzenauftragssystems (zB ein Hardo-Walzenauftragssystem) auf ein Substrat als Folie aufgebracht werden. Es ist auch möglich, LRG im Walzenauftragssystem selbst aufzuschmelzen.

### 2.5 Herstellung von Schmelzklebstoffzusammensetzungen mit Reaktionsmischung 1 und Polymeren verschiedener Zugfestigkeiten als Komponente a):

Tabelle 1 zeigt Beispiele von Polymeren, welche als Komponente a) mit Reaktionsmischung 1 zusammen verwendet wurden, um einen flexiblen Schmelzklebstofffilm herzustellen, sowie die Eigenschaften dieser Polymere hinsichtlich des Molekulargewichts, der Funktionalisierung mit Hydroxylgruppen und der Zugfestigkeit.

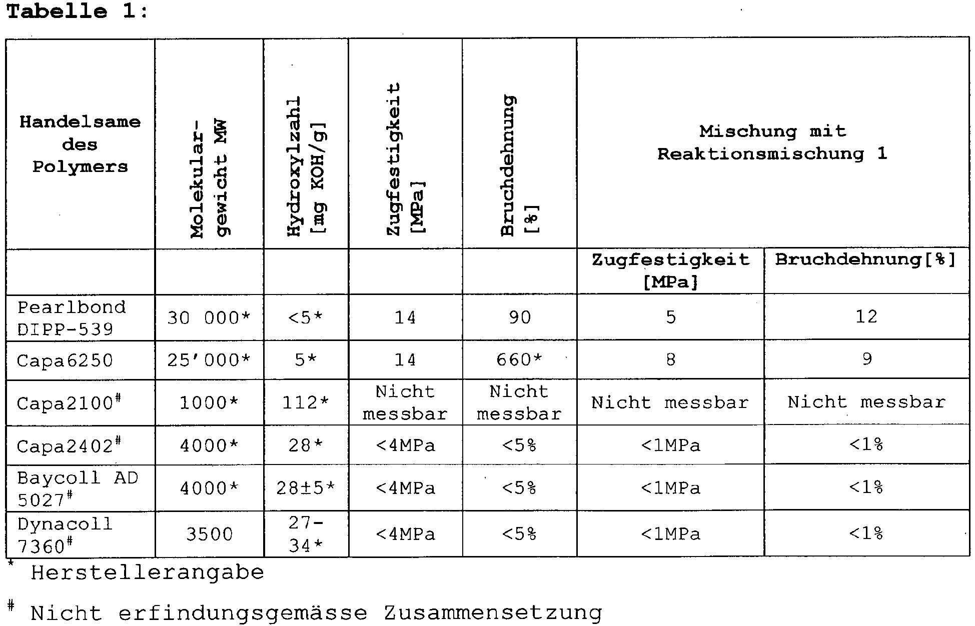

### BEISPIEL 3

### Herstellung einer Desaktivierungsmischung A:

Ein flüssiges Polyol (Capa 3091 von Perstorp, 172g), ein Polyetheramin (Jeffamine T 403 von Huntsman, 13g) und Dibutylzinndilaurat (Sigma-Aldrich, 1g) wurden mit einem Glasstab vermischt.

### Herstellung einer LRF:

Es wurde ein Zweiwellenkneter verwendet, der mit einer Pulver- und Granulatsdosierungsvorrichtung ausgestattet wurde. Des Weiteren umfasst der Zweiwellenkneter eine Flüssigdosierung.

Ein thermoplastisches Polyol (Capa 6250 von Perstorp, 690 g/h) und dimeres 2,4-Toluoldiisocyanat (Addolink TT von Rheinchemie, 125 g/h) wurden in den Zweiwellenkneter gegeben. Desaktivierungsmischung A (185 g/h) wurde zugegeben. Mittels Strangabzug und Granulierung wurde ein Granulat hergestellt. Bei Verwendung einer Flachschlitzdüse konnte eine latent reaktive Folie (LRF) hergestellt werden.

Die so hergestellten Folien können bei Raumtemperatur mehrere Monate lang stabil gelagert werden. Das Produkt kann mittels einer Heizpresse bei 100 bis 150°C (bevorzugt bei 110 bis 120°C) verklebt, d.h. ausgehärtet werden.

### Versuche mit verschiedenen Zusammensetzungen zur Bestimmung der Zugfestigkeit:

Die Zugfestigkeit eines Probekörpers einer Schmelzklebstoffzusammensetzung gemäss Ausführungsbeispiel 1 wurde mit Hilfe eines Zugprüfgeräts von Zwick Roell Z005 TN mit einer Prüfgeschwindigkeit von 50mm/min gemäss der Norm EN ISO 527-2:1996 mit dem Probekörpertypus 1BA, welcher aus einer Platte ausgestanzt wurde, gemessen und wies einen Wert von > 4 MPa auf.

Eine Übersicht der untersuchten Zusammensetzungen und der Resultate ist in Tabelle 2 dargestellt.

**Tabelle 2:**

| **Zusammensetzung** | **Hergestelltes Produkt** | **Zugfestigkeit [MPa]** | **Bruchdehnung [%]** |
|---|---|---|---|
| Latent reaktive Folie /erfindungsgemässes Granulat | Probekörperherstellung durch Schmelzen, Pressen und Stanzen | > 4 | > 9 |
| HCM 555 G (Collano Group) | Spröder Probekörper | < 4 | < 2 |
| Lareas (Collano Group) | Spröder Probekörper | < 4 | < 2 |
| Ex. 11 nach EP 1 433 802 A1 | Spröder Probekörper | < 4 | < 2 |
| Ex. 12 nach EP 1 433 802 A1 | Spröder Probekörper | < 4 | < 2 |
| Bsp. 1 nach EP 1 231 232 B1 | Spröder Probekörper | < 4 | < 2 |

### Rheologische Untersuchung zum Aushärten der erfindungsgemässen latent reaktiven Schmelzklebstoffzusammensetzung:

Ein rheologisches Experiment zum Aushärten einer erfindungsgemässen latent reaktiven Schmelzklebstoffzusammensetzung gemäss Ausführungsbespiel 1 wurde mit Hilfe eines Rheometers (Anton Paar MCR 301) durchgeführt mit einer Amplitude von Y = 1%, einer Kreisfrequenz ω = 1 rad/s, mit einer Heizrate von 5K/min von 65°C auf 120°C.

Der Verlustmodul G" hatte bis zu einer Temperatur von unter 80°C einen Wert von ca. 10³ Pa und stieg dann, während die Temperatur sich auf 120°C erhöhte, auf > 10⁴ Pa an.

Der Speichermodul G' lag bis zu einer Temperatur < 120°C bei einem Wert von > 10¹ Pa unter dem des Verlustmoduls G", d.h. die erfindungsgemässe Zusammensetzung lag im flüssigen bzw. verformbaren Zustand vor. Bei 120°C erfolgte ein Anstieg von G' auf > 10⁵ Pa. Damit überstieg der Wert von G' denjenigen von G", d.h. die Zusammensetzung ging bei etwa 120°C in den festen Zustand über.

### Rheologische Wärmestandsuntersuchung der erfindungsgemässen Schmelzklebstoffzusammensetzung:

Ausgehärtete Proben einer erfindungsgemässen Zusammensetzung gemäss Ausführungsbeispiel 1 wurden in einem Rheometer (Anton Paar MCR 301; Platte-Platte) mit einer Amplitude von Y=1%, einer Frequenz von f=1Hz, einer Heizrate von 2°C/min über einen Temperaturbereich von 30°C bis 170°C untersucht.
Nachdem die Werte (in Pa) für den Speicher- und den Verlustmodul der erfindungsgemässen Zusammensetzung, G' bzw. G", bis zu einer Temperatur von ca. 60°C abfielen, blieben ihre jeweiligen Werte > 60°C bis 170°C weitgehend konstant bei > 10⁴ Pa bzw. > 10⁵ Pa. Dies weist auf eine Temperaturbeständigkeit der ausgehärteten Zusammensetzung im Bereich von > 60°C bis 170°C hin.

## Patentansprüche

1. Latent reaktive Schmelzklebstoffzusammensetzung umfassend
a) mindestens ein erstes thermoplastisches Polymer, welches monofunktionell reaktiv gegenüber NCO-Gruppen ist und eine Zugfestigkeit von σ_{M} ≥ 4 MPa bis 30 MPa gemessen nach EN ISO 527-1:1996, sowie eine Bruchdehnung ε_{B} ≥ 5% bis 1000% gemessen nach EN ISO 527-1:1996 aufweist,
b) mindestens ein zweites NCO-reaktives Polymer und/oder Oligomer, welches mindestens di-, bevorzugt tri- oder multifunktionell reaktiv gegenüber NCO-Gruppen ist und eine Schmelztemperatur Tₘ, die niedriger als die Schmelztemperatur Tₘ von Polymer a) ist, besitzt und insbesondere bei 40°C, bevorzugt bei 30°C, besonders bevorzugt bei 20°C in flüssiger Form vorliegt,
c) mindestens ein festes, oberflächendesaktiviertes Di- und/oder Polyisocyanat,
d) optional ein oder mehrere, weitere(s) thermoplastische(s) Polymer(e), welche(s) nicht mit NCO-Gruppen reagiert bzw. reagieren.

2. Latent reaktive Schmelzklebstoffzusammensetzung nach Anspruch 1, worin
- die Komponente a) zu mindestens 20 Gew%, bevorzugt mindestens 50 Gew%, besonders bevorzugt mindestens 60 Gew%;
- die Komponente b) von 5 bis 40 Gew%, bevorzugt zwischen 10 Gew% und 25 Gew%;
- die Komponente c) zu 5 bis 25 Gew%; und
- optional die Komponente d) zu 0 bis 10 Gew% vorliegt.

3. Latent reaktive Schmelzklebstoffzusammensetzung nach einem der vorangehenden Ansprüche, worin das thermoplastische Polymer a) eine Schmelztemperatur von Tₘ < 100°C, bevorzugt < 70°C aufweist.

4. Latent reaktive Schmelzklebstoffzusammensetzung nach einem der vorangehenden Ansprüche, worin das Di- oder Polyisocyanat c) eine Schmelztemperatur von Tₘ > 70, bevorzugt ≥ 100°C, besonders bevorzugt ≥ 110°C aufweist.

5. Latent reaktive Schmelzklebstoffzusammensetzung nach einem der vorangehenden Ansprüche, worin die Komponente c) erhältlich ist durch die Zugabe zu dem Di- oder Polyisocyanat von einem oder mehreren Desaktivierungsmitteln, die mit NCO-Gruppen reagieren.

6. Latent reaktive Schmelzklebstoffzusammensetzung nach einem der vorangehenden Ansprüche, welche im Temperaturbereich von > 70 bis 160°C, vorzugsweise im Bereich von 110 bis 120°C aushärtbar ist.

7. Latent reaktive Schmelzklebstoffzusammensetzung nach einem der vorangehenden Ansprüche, worin das thermoplastische Polymer a) ein mittleres Molekulargewicht M_{w} ≥ 25000 g/mol bis 100 000 g/mol aufweist und es sich insbesondere um ein Polycaprolacton und/oder ein Polycaprolacton Polyurethan Präpolymer handelt.

8. Latent reaktive Schmelzklebstoffzusammensetzung nach einem der vorangehenden Ansprüche, worin das zweite NCO-reaktive Polymer oder Oligomer b) ein Polycaprolacton, Polyester, Copolyester, Polyether, Copolyether und/oder ein Polycarbonat mit einem mittleren Molekulargewicht M_{w} ≤ 4000 g/mol ist.

9. Latent reaktive Schmelzklebstoffzusammensetzung nach einem der vorangehenden Ansprüche, worin das Di- und/oder Polyisocyanat ausgewählt ist aus der Gruppe von dimerem 2,4-Toluoldiisocyanat sowie dessen Derivaten, 1,5-Diisocyanatonaphthalin, Diisocyanatotoluolenharnstoffe, 1-Isocyanato-3-isocyanatomethyl-3,5,5-trimethylcyclohexan-Isocyanurat, 3,3'-Dimethylbiphenyl-4,4'-diisocyanat, 3,3'-Diisocyanato-4,4'-dimethyl-N,N-diphenylharnstoff, Diphenylmethan-2,2'-diisocyanat-Dimer, Diphenylmethan-2,4'-diisocyanat-Dimer, Diphenylmethan-4,4'-diisocyanat Dimer sowie Mischungen, Uretdion-Dimere, Harnstoff-Dimere, Trimere und Präpolymere der zuvor genannten Verbindungen.

10. Latent reaktive Schmelzklebstoffzusammensetzung nach einem der vorangehenden Ansprüche, worin die Komponente d) ein oder mehrere thermoplastische Polymere sind, welche nicht mit NCO-Gruppen reagieren.

11. Verfahren zur Herstellung eines latent reaktiven Schmelzklebstoffgranulats umfassend
i) das Mischen eines oder mehrerer Isocyanate mit einem oder mehreren Desaktivierungsmitteln und gegebenenfalls mit der Komponente b) der latent reaktiven Schmelzklebstoffzusammensetzung gemäss einem der Ansprüche 1 bis 10,
ii) das Mischen der im Verfahrensschritt i) erhaltenen Mischung mit der Komponente a) und gegebenenfalls mit den Komponenten b) und/oder d) der latent reaktiven Schmelzklebstoffzusammensetzung gemäss einem der Ansprüche 1 bis 10 in einer Mischvorrichtung bei einer Temperatur im Bereich von ≥ 40°C bis 100°C, vorzugsweise 50°C bis 70°C,
iii) das Extrudieren der gemäss Schritt ii) erhaltenen Mischung als Strang; und
iv) das Granulieren des Strangs.

12. Verfahren zur Herstellung einer latent reaktiven Schmelzklebstofffolie umfassend
i) das Mischen eines oder mehrerer Isocyanate mit einem oder mehreren Desaktivierungsmitteln und gegebenenfalls mit der Komponente b) der latent reaktiven Schmelzklebstoffzusammensetzung gemäss einem der Ansprüche 1 bis 10,
ii) das Mischen der im Verfahrensschritt i) erhaltenen Mischung mit der Komponente a) und gegebenenfalls mit den Komponenten b) und/oder d) der latent reaktiven Schmelzklebstoffzusammensetzung gemäss einem der Ansprüche 1 bis 10 in einer Mischvorrichtung bei einer Temperatur im Bereich von ≥ 40°C bis 100°C, vorzugsweise 50°C bis 70°C,
iii) das Extrudieren und/oder Auswalzen entweder der in Schritt ii) erhaltenen Mischung oder eines gemäss Anspruch 11 erhaltenen Granulats als Folie.

13. Verwendung einer latent reaktiven Schmelzklebstoffzusammensetzung gemäss den Ansprüchen 1 bis 10 zur Herstellung eines latent reaktiven Schmelzklebstoffgranulats oder einer latent reaktiven Schmelzklebstofffolie.

14. Klebstoffzusammensetzung erhältlich durch Erwärmung einer latent reaktiven Schmelzklebstoffzusammensetzung gemäss einem der Ansprüche 1 bis 10 auf eine Temperatur von > 70°C bis 160°C, vorzugsweise auf 110°C bis 120°C.

15. Beschichtetes Substrat oder Fügeteil umfassend eine latent reaktive Schmelzklebstoffzusammensetzung gemäss den Ansprüchen 1 bis 10 oder eine Klebstoffzusammensetzung gemäss Anspruch 14.

## Claims

1. Latent-reactive hot-melt adhesive composition comprising
a) at least one first thermoplastic polymer which is monofunctionally reactive toward NCO groups and has a tensile strength of σ_{M} ≥ 4 MPa to 30 MPa as measured to EN ISO 527-1:1996 and an elongation at break of ε_{B} ≥ 5% to 1000% as measured to EN ISO 527-1:1996,
b) at least one second NCO-reactive polymer and/or oligomer which is at least di-functionally, preferably tri- or multifunctionally, reactive toward NCO groups and possesses a melting temperature Tₘ which is lower than the melting temperature Tₘ of polymer a) and which is in liquid form in particular at 40°C, preferably at 30°C, very preferably at 20°C,
c) at least one solid, surface-deactivated di- and/or polyisocyanate,
d) optionally one or more further thermoplastic polymer (s) which does or do not react with NCO groups.

2. Latent-reactive hot-melt adhesive composition according to Claim 1, wherein
- component a) is present at not less than 20 wt%, preferably not less than 50 wt%, more preferably not less than 60 wt%;
- component b) is present at from 5 to 40 wt%, preferably between 10 wt% and 25 wt%;
- component c) is present at 5 to 25 wt%; and
- optionally component d) is present at 0 to 10 wt%.

3. Latent-reactive hot-melt adhesive composition according to any of the preceding claims, wherein the thermoplastic polymer a) has a melting temperature of Tₘ < 100°C, preferably < 70°C.

4. Latent-reactive hot-melt adhesive composition according to any of the preceding claims, wherein the di- or polyisocyanate c) has a melting temperature of Tₘ > 70°C, preferably of ≥ 100°C, more preferably of ≥ 110°C.

5. Latent-reactive hot-melt adhesive composition according to any of the preceding claims, wherein component c) is obtainable by the addition to the di- or polyisocyanate of one or more deactivating agents which react with NCO groups.

6. Latent-reactive hot-melt adhesive composition according to any of the preceding claims, which is curable in the temperature range from > 70 to 160°C, preferably in the range from 110 to 120°C.

7. Latent-reactive hot-melt adhesive composition according to any of the preceding claims, wherein the thermoplastic polymer a) has an average molecular weight M_{w} ≥ 25 000 g/mol to 100 000 g/mol and is more particularly a polycaprolactone and/or a polycaprolactone polyurethane prepolymer.

8. Latent-reactive hot-melt adhesive composition according to any of the preceding claims, wherein the second NCO-reactive polymer or oligomer b) is a polycaprolactone, polyester, copolyester, polyether, copolyether and/or a polycarbonate having an average molecular weight M_{w} ≤ 4000 g/mol.

9. Latent-reactive hot-melt adhesive composition according to any of the preceding claims, wherein the di- and/or polyisocyanate is selected from the group of dimeric 2,4-toluene diisocyanate and its derivatives, 1,5-diisocyanatonaphthalene, diisocyanatotolueneureas, 1-isocyanato-3-isocyanatomethyl-3,5,5-trimethylcyclohexane isocyanurate, 3,3'-dimethylbiphenyl 4,4'-diisocyanate, 3,3'-diisocyanato-4,4'-dimethyl-N,N-diphenylurea, diphenylmethane 2,2'-diisocyanate dimer, diphenylmethane 2,4'-diisocyanate dimer, diphenylmethane 4,4'-diisocyanate dimer and mixtures, uretdione dimers, urea dimers, trimers, and prepolymers of the aforesaid compounds.

10. Latent-reactive hot-melt adhesive composition according to any of the preceding claims, wherein component d) is one or more thermoplastic polymers which do not react with NCO groups.

11. Method for producing latent-reactive hot-melt adhesive granules, comprising
i) mixing one or more isocyanates with one or more deactivating agents and optionally with component b) of the latent-reactive hot-melt adhesive composition, according to any of Claims 1 to 10,
ii) mixing the mixture obtained in method step i) with component a) and optionally with components b) and/or d) of the latent-reactive hot-melt adhesive composition according to any of Claims 1 to 10 in a mixing device at a temperature in the range from ≥ 40°C to 100°C, preferably 50°C to 70°C,
iii)extruding the mixture obtained as per step ii), as a strand, and
iv) granulating the strand.

12. Method for producing a latent-reactive hot-melt adhesive film, comprising
i) mixing one or more isocyanates with one or more deactivating agents and optionally with component b) of the latent-reactive hot-melt adhesive composition, according to any of Claims 1 to 10,
ii) mixing the mixture obtained in method step i) with component a) and optionally with components b) and/or d) of the latent-reactive hot-melt adhesive composition according to any of Claims 1 to 10 in a mixing device at a temperature in the range from ≥ 40°C to 100°C, preferably 50°C to 70°C,
iii)extruding and/or rolling out either the mixture obtained in step ii), or granules obtained according to Claim 11, as a film.

13. Use of a latent-reactive hot-melt adhesive composition according to any of Claims 1 to 10 for producing latent-reactive hot-melt adhesive granules or a latent-reactive hot-melt adhesive film.

14. Adhesive composition obtainable by heating a latent-reactive hot-melt adhesive composition according to any of Claims 1 to 10 to a temperature of > 70°C to 160°C, preferably to 110°C to 120°C.

15. Coated substrate or adherend comprising a latent-reactive hot-melt adhesive composition according to any of Claims 1 to 10 or an adhesive composition according to Claim 14.

## Revendications

1. Composition adhésive fusible réactive latente, comprenant
a) au moins un premier polymère thermoplastique, qui est monofonctionnellement réactif par rapport aux groupes NCO et qui présente une résistance à la traction σ_{M} ≥ 4 MPa jusqu'à 30 MPa, mesurée selon la norme EN ISO 527-1:1996, ainsi qu'un allongement à la rupture ε_{B} ≥ 5% jusqu'à 1000%, mesuré selon la norme EN ISO 527-1:1996,
b) au moins un deuxième polymère et/ou oligomère réactif avec NCO, qui est au moins difonctionnellement, de préférence trifonctionnellement ou polyfonctionnellement réactif par rapport aux groupes NCO et qui présente une température de fusion Tₘ, qui est inférieure à la température de fusion Tₘ du polymère a) et qui se trouve sous forme liquide, en particulier à 40°C, de préférence à 30°C, de manière particulièrement préférée à 20°C,
c) au moins un diisocyanate et/ou polyisocyanate solide, désactivé en surface,
d) éventuellement un ou plusieurs autre(s) polymère(s) thermoplastique(s) qui ne réagi(ssen)t pas avec les groupes NCO.

2. Composition adhésive fusible réactive latente selon la revendication 1, dans laquelle
- le composant a) est présent à raison d'au moins 20% en poids, de préférence d'au moins 50% en poids, de manière particulièrement préférée d'au moins 60% en poids ;
- le composant b) est présent à raison de 5 à 40% en poids, de préférence entre 10% en poids et 25% en poids ;
- le composant c) est présent à raison de 5 à 25% en poids ; et
- éventuellement, le composant d) est présent à raison de 0 à 10% en poids.

3. Composition adhésive fusible réactive latente selon l'une quelconque des revendications précédentes, dans laquelle le polymère thermoplastique a) présente une température de fusion Tₘ < 100°C, de préférence < 70°C.

4. Composition adhésive fusible réactive latente selon l'une quelconque des revendications précédentes, dans laquelle le diisocyanate ou le polyisocyanate c) présente une température de fusion Tₘ > 70°C, de préférence ≥ 100°C, de manière particulièrement préférée ≥ 110°C.

5. Composition adhésive fusible réactive latente selon l'une quelconque des revendications précédentes, dans laquelle le composant c) peut être obtenu par addition d'un ou de plusieurs des agents de désactivation, qui réagissent avec les groupes NCO, au diisocyanate ou au polyisocyanate.

6. Composition adhésive fusible réactive latente selon l'une quelconque des revendications précédentes, qui est durcissable dans la plage de température de > 70 jusqu'à 160°C, de préférence dans la plage de température de 110 à 120°C.

7. Composition adhésive fusible réactive latente selon l'une quelconque des revendications précédentes, dans laquelle le polymère thermoplastique a) présente un poids moléculaire moyen M_{w} ≥ 25.000 g/mole jusqu'à 100.000 g/mole et il s'agit en particulier d'une polycaprolactone et/ou d'un prépolymère de polycaprolactone-polyuréthane.

8. Composition adhésive fusible réactive latente selon l'une quelconque des revendications précédentes, dans laquelle le deuxième polymère ou oligomère b) réactif avec NCO est une polycaprolactone, un polyester, un copolyester, un polyéther, un copolyéther et/ou un polycarbonate présentant un poids moléculaire moyen M_{w} ≤ 4000 g/mole.

9. Composition adhésive fusible réactive latente selon l'une quelconque des revendications précédentes, dans laquelle le diisocyanate et/ou le polyisocyanate est choisi dans le groupe formé par le diisocyanate de 2,4-toluène dimère ainsi que ses dérivés, le 1,5-diisocyanatonaphtalène, la diisocyanatotoluène-urée, l'isocyanurate de 1-isocyanato-3-isocyanatométhyl-3,5,5-triméthylcyclohexane, le 4,4'-diisocyanate de 3,3'-diméthylbiphényle, la 3,3'-diisocyanato-4,4'-diméthyl-N,N-diphénylurée, le dimère de 2,2'-diisocyanate de diphénylméthane, le dimère de 2,4'-diisocyanate de diphénylméthane, le dimère de 4,4'-diisocyanate de diphénylméthane ainsi que leurs mélanges, les dimères d'uretdione, les dimères d'urée, les trimères et les prépolymères des composés susmentionnés.

10. Composition adhésive fusible réactive latente selon l'une quelconque des revendications précédentes, dans laquelle le composant d) est constitué par un ou plusieurs polymères thermoplastiques, qui ne réagissent pas avec les groupes NCO.

11. Procédé pour la préparation d'un granulat adhésif fusible réactif latent comprenant
i) le mélange d'un ou de plusieurs isocyanates avec un ou plusieurs agents de désactivation et le cas échéant avec le composant b) de la composition adhésive fusible réactive latente selon l'une quelconque des revendications 1 à 10,
ii) le mélange du mélange obtenu dans l'étape de procédé i) avec le composant a) et le cas échéant avec les composants b) et/ou d) de la composition adhésive fusible réactive latente selon l'une quelconque des revendications 1 à 10 dans un dispositif de mélange à une température dans la plage de ≥ 40°C jusqu'à 100°C, de préférence de 50°C à 70°C,
iii) l'extrusion du mélange obtenu selon l'étape ii) sous forme d'un brin ; et
iv) la granulation du brin.

12. Procédé pour la préparation d'une feuille adhésive fusible réactive latente comprenant
i) le mélange d'un ou de plusieurs isocyanates avec un ou plusieurs agents de désactivation et le cas échéant avec le composant b) de la composition adhésive fusible réactive latente selon l'une quelconque des revendications 1 à 10,
ii) le mélange du mélange obtenu dans l'étape de procédé i) avec le composant a) et le cas échéant avec les composants b) et/ou d) de la composition adhésive fusible réactive latente selon l'une quelconque des revendications 1 à 10 dans un dispositif de mélange à une température dans la plage de ≥ 40°C jusqu'à 100°C, de préférence de 50°C à 70°C,
iii) l'extrusion et/ou le laminage, soit du mélange obtenu dans l'étape ii), soit d'un granulat obtenu salon la revendication 11, sous forme d'une feuille.

13. Utilisation d'une composition adhésive fusible réactive latente selon les revendications 1 à 10 pour la préparation d'un granulat adhésif fusible réactif latent ou d'une feuille adhésive fusible réactive latente.

14. Composition adhésive pouvant être obtenue par chauffage d'une composition adhésive fusible réactive latente selon l'une quelconque des revendications 1 à 10 à une température > 70°C jusqu'à 160°C, de préférence à 110°C jusqu'à 120°C.

15. Substrat ou raccord revêtu comprenant une composition adhésive fusible réactive latente selon les revendications 1 à 10 ou une composition adhésive selon la revendication 14.
